# EUROPEAN PATENT APPLICATION

(11) **EP 1 921 578 A1**
(43) Date of publication of application: **14.05.2008**
(21) Application number: 06023532.2
(22) Date of filing: 13.11.2006
(51) Int. Cl.: G06Q 20/00

(54) **Payment method and system between the buyer and seller by means of a third party**

(71) Applicant: Yellow One Asset Management Ltd., 41 Chalton Street London (GB)
(72) Inventor: Aiello, Sandro, 28113 Bee (VB) (IT)
(74) Representative: Turini, Laura

(57) **Abstract**

This invention concerns a method of payment that allows the secure execution of transactions where the payment is only processed if the debtor has sent the transaction consent subsequent to the sending of his identification codes and prior to completion of said transaction. Thanks to this process, the debtor's sensitive data, such as that present on his credit card, even if illegally extracted, cannot be used to execute successfully any transaction. The remote system makes provision for the transaction authorization to be directly requested from the debtor using a telematic channel different to that used for transmitting the original data.

## Description

### Technical Field

The object of the invention is a method and a system using electronic and/or electrical devices to execute financial transactions in a secure way, that is to say the transfer by any means of a sum of money by a user, generically defined as "debtor" or "buyer", in favour of another party, generically defined as "creditor" or "seller" by means of a third party who oversees the transaction and the relative payment mechanism.

### Background Art

Methods and systems of this type are known. At present the most widely used payment method is that which lends itself to credit cards. Said method makes provision for a buyer to present physically his own card to a seller who passes the card through a device provided with a reader that reads the identification code of the buyer associated with the card. The device is furthermore provided with a keyboard with which the seller types in the amount of the operation and also with a non-volatile memory in which a univocal code that identifies the seller is stored during the installation stage. By means of a suitable system, the device contacts the third party, for example the bank of the buyer that physically holds the money and can transfer it to the seller. During the connection, the third party receives the identification codes of the card, of the seller and the operation amount. If the card's code is recognised, the card is not blocked and the amount does not exceed a prearranged limit, the third party carries out the payment and undertakes to send a receipt that the seller, after having printed, will give to the buyer to be signed as authorisation of the transaction just carried out.

Another known payment method makes provision for the transaction authorisation to be supplied by the buyer before the third party is contacted by means of the typing of a secret code, called a PIN, directly onto the keyboard of the device that has carried out the reading of the card, also called POS. If the PIN is not correct the transaction stops and the third party is not contacted. The cards used for this payment mode are generally microchip debit cards such as for example the so-called bancomat (ATM) or pagobancomat (debit) cards.

However, these methods have a serious disadvantage represented by the ease with which fraud can be carried out against the final user.

In the case of cards that do not require the use of an authorisation PIN code such as credit cards, a third party only has to come into possession of the card's identification codes, among others generally written in relief on all the cards belonging to the most widely used international networks, in order to be able to carry out illicit transactions, for example via the Internet, or in any case from a remote position, without ever needing to clone the card. The third party can come into possession of the card's identification codes not only following the loss of the card, but also by interception during a payment operation while said codes are being transferred towards a seller or the payment centre or alternatively subsequent to this transfer simply by catching a glimpse of the payment receipts that contain the identification data of the transaction.

In the case of cards that require the use of an authorisation PIN code, is it not sufficient for the third party committing the fraud to come into possession of the identification codes of the card to be able to carry out illicit operations since the authorisation PIN code is not present on the card or at least is not legible. In this case, in order to defraud the user it is also necessary to intercept the PIN. This is possible for example by "glancing" at the user while he types on the reader of the seller during a transaction, both with electronic means such as cameras or sophisticated devices caller skimmers applied to the reader itself, or simply by observing and manually noting down the numbers typed in. In the majority of cases it is user himself who carelessly supplies the code either because it has been requested or simply because he has written the code on the card or close to the latter in order to remember it.
In these situations numerous payments can be made that are the responsibility of the card manager, in the case in which the payment is dubious for any reason, or if the buyer is obliged to pay amounts not intentionally incurred by him, but rather incurred without authorisation by others.

There are known systems that serve to avoid these drawbacks, above all in the field of online purchases made on the Internet, in which the use of protected connections is provided by means of which sensitive data is transferred in an encrypted form between two or more entities, such as for example the buyer and the debtor. In this way it is possible to limit the risk of the misappropriation of codes by third parties who can enter into in the communication channel used, but it is not possible to prevent the illicit use of these codes once they have been received by the seller. Systems are known that serve to avoid this disadvantage in the buyer does not communicate the card code to the seller, but rather directly to the third party assigned to execute the transaction. An example of these systems is described in the document WO02/05231 in which, in an online payment system, the seller's website includes technical devices that direct the buyer to the site of the payer entity after having disconnected the connection with the seller. In this way the buyer does not communicate the sensitive data, in particular the credit card number, to the seller, but rather directly to the third party payer. The seller, or the individual capable of illegally eliciting this sensitive information, is not therefore able to carry out illicit operations that would be damaging to the buyer. This system, however, does not solve the problem of the possible misappropriation of the code during the communication toward the third party payer. Moreover, it makes it essential for the buyer to take an active part in executing the transaction by installing a direct connection with the third party payer. If this is acceptable in the field of an Internet transaction, it is not however practical when the purchase is carried out in the usual ways at the location of the seller. Moreover, this system does not prevent illicit debits being made by a fraudulent individual who has cloned a card or has otherwise elicited the identification codes.
The aim of this invention is to solve at least partially the aforementioned drawbacks by providing a method and a system to execute financial transactions securely that, despite using a third party to make a payment, is not subjected to unauthorised use.

### Disclosure of invention

The invention achieves the aim with a method of the type described at the beginning and comprising the following steps:
a. receive, by means of a first telematic channel for transmission and/or audio and/or data reception, information at least in relation to:
   - the identification code of the debtor;
   - the identification code of the creditor;
   - the details of the payment, in particular the transaction amount;
b. formulate said information,
   in which the following steps are also present:
c. request consent for the transaction from the debtor by means of a second telematic channel for transmission and/or audio and/or data reception;
d. receive said possible consent from the debtor;
e. process the payment if the consent is received;
f. send confirmation of the outcome of the transaction request to the debtor and/or to the creditor.

The method according to the invention allows the secure execution of transactions with respect to the identification code(s) even if the transactions are transferred through the creditor by means of any telematic channel towards a remote third party assigned to supervise the transaction and the relative payment mechanism, they do not represent information in itself sufficient to complete the transaction. In fact the payment is only processed if the debtor has sent the transaction consent subsequent to the sending of his identification codes and prior to completion of said transaction. Thanks to this process, the debtor's sensitive data, such as that present on his credit card, even if illegally extracted, cannot be used to execute successfully any transaction.
In fact, the remote system makes provision for the transaction authorization to be directly requested from the debtor using a telematic channel different to that used for transmitting the data from the creditor towards the third party payer.

According to one embodiment, the request for consent for the transaction includes the step of directing a voice and/or data call containing the details of the transaction and the request for authorisation towards a terminal associated to the debtor interfaced to the fixed and/or mobile telephone network, such as a mobile telephone, a palm or a laptop. The remote system contacts the terminal associated to the debtor, typically a cellular telephone, sending a set of data and/or calling the telephone number associated with it during the configuration stage of the system. At this point the debtor may or may not confirm the transaction, for example by pressing one or more key or by sending a vocal sequence or a text message such as an SMS. In order to increase security further, provision can advantageously be made for the transaction consent to comprise the acquisition of an additional code different to the identification code of the debtor, for example by means of typing onto the keypad of the cellular telephone. In particular the request for consent to the transaction can comprise the sending of an authorisation code, randomly generated, that is different to the debtor's identification code, for example by means of an SMS message addressed to the debtor's terminal. At this point the debtor may or may not confirm the transaction by sending this code by means of the first telematic channel rather than by means of the second channel through which it has been received, for example by using the keyboard of the POS terminal by means of which the traditional type PIN codes are commonly typed. The consent to the transaction is considered as received if the authorisation code sent to the debtor by means of the second channel is the same as the authorisation code received by means of the first channel. This is particularly advantageous in the field of credit card purchases on the Internet. Thanks to these strategies, in order to be able to execute an illicit transaction it would be necessary not only to have the debtor's identification codes (for example his credit card data card), but also the terminal or at least the telephone card associated with said terminal. Moreover, in the case that authorisation requires not only the pressing of a key, but also, or as an alternative, the typing of a code, this should also be "snatched". All this, together with the fact that the consent to the transaction is transferred only on telephone networks and terminals that by nature are subject to a minor risk of interception, certainly contributes to reducing drastically the risks of illicit debits.

Advantageously the debtor's identification code is received by the remote third party from terminal associated to the creditor by means of a data and/or telephone connection on a fixed and/or mobile telephone network or switched or dedicated data networks, Internet connections can also be used, preferably using a communication protocol of the protected type, rendering the method suitable for use also in the field of online transactions. In fact, even if the communication channel is not particularly secure and measures were not taken, for example those described in the document WO02/05231, that prevent the creditor from coming into possession of the debtor's identification codes, the security of the transaction still remains guaranteed by the explicit consent requested from the debtor by means of a second communication channel as illustrated above.

According to one embodiment, the data and/or telephone connection between the remote third party and creditor is installed when a telephone number associated to the third party is dialled by a terminal associated to the creditor. Preferably this is a fixed telephone terminal to which is interfaced, for example, a credit card or ATM (POS) reader to acquire the identification code from the debtor. The reader, although advantageous, is not however essential for carrying out the invention since the codes of the debtor can be communicated to the creditor in any form, for example by voice or by means of Internet connection or a text message such as an SMS.

Advantageously the remote third party confirms the outcome of the transaction to the creditor by means of the sending of a vocal message and/or data to the terminal remote to the creditor after having received authorisation from the debtor. The message is sent by means of the same telematic channel used to receive the information from the creditor and, in particular, is sent within the same connection after the creditor's terminal has been placed on stand-by subsequent to the reception of said information. The outcome of the transaction may also be sent to the debtor's terminal in the form of a vocal message and/or data. In particular this can be sent in a stage subsequent to the reception of the consent after the call has been made, for example in the form of a text message such as an SMS or by using a telematic channel different to that used to obtain the consent, such as for example on the Internet. In this case the message advantageously is an e-mail addressed to an inbox associated to the debtor.

According to another aspect the invention relates to a payment system including:
- a remote payment unit to process the transactions and confirm the outcome of said transactions;
- means to acquire from the creditor user the identification code of the debtor user;
- means to acquire payment details from the creditor user, in particular the transaction amount and the identification code of the creditor user;
- a first telematic channel for transmission and/or audio and/or data reception by means of which the identification codes and the payment details can be transferred from the creditor user to the remote payment unit,
the system further comprising:
- means to acquire consent to the transaction from the debtor user;
- a second telematic channel for transmission and/or audio and/or reception data by means of which said consent can be required from the payment unit,
the payment unit being configured to execute the following steps:
- receive from the creditor user by means of the first telematic channel the identification codes of two users and the payment details;
- request consent to the transaction from the debtor user by means of the second telematic channel;
- receive the possible consent to the transaction from the debtor user;
- process the payment if consent is received;
send confirmation of the completed transaction to the debtor user and/or to the creditor user.

Advantageously, the means to acquire from the debtor user the consent to the transaction include an interface towards a fixed and/or mobile telephone network that can carry out a voice and/or data call towards a telephone terminal associated to the debtor user. In particular the telephone terminal is part of, or is interfaced with, a mobile telephone, a palm or a laptop through which the debtor user is able to receive the request for consent and/or send or not this consent. In its preferred embodiment form the telephone terminal is a cellular telephone.

The payment unit advantageously includes a database containing, for each identification code of the debtor users, the telephone number(s) of cellular telephones associated to them, the unit being configured to dial the cellular telephone number associated to the debtor user, to install a voice and/or data connection, to send the request for consent and to receive or not said consent by means of the same connection in the form of a vocal confirmation or an encoded signal that corresponds to the pressing of one or more keys on the cellular telephone. Alternatively, consent may also be received in the form of a text message such as an SMS after the call has been made.

According to a particularly advantageous embodiment, the means to acquire consent to the transaction comprise a unit capable of receiving and authenticating an authorisation code communicated by the debtor user to increase the level of security. In particular the unit is configured to send the request for consent in the form of a text message to the cellular telephone associated to the debtor user, the message containing an authorisation code, and to receive or not said authorisation code by means of the first telematic channel. In this case, consent to the settlement is considered as received if the authorisation code received is the same as the authorisation code sent. In order to achieve this aim the remote payment unit advantageously includes a generator to generate authorisation codes randomly for each transaction. In order to increase security the authorisation codes generated for each transaction are of the OTP type, that is to say that they can only be used once and they expire, namely they can only be used to close the transaction within a certain time window. The means to acquire from the creditor user the identification code of the debtor user preferably comprise an interface towards a fixed and/or mobile telephone network and/or Internet network capable of receiving a voice and/or data connection from a terminal associated to the creditor user. In particular, this terminal is part of, or is interfaced with, a mobile telephone, a palm or a laptop or a desktop computer through which the payment unit is able to receive the identification code of the debtor user. Advantageously, the terminal includes an input device through which the identification code of the debtor user can be acquired by the system. The input device can be a keyboard such as magnetic and/or microchip and/or barcode and/or biometrical data card readers containing the identification code of the debtor user. Typically the reader is adapted to read credit cards, debit cards, ATM cards and/or smart cards or the like, but it can also be configured to receive the identification code of the remote debtor user by means of the Internet.

According to one embodiment form, the means to acquire the payment details and the identification code of the creditor user from the creditor user comprise an interface towards a fixed and/or mobile telephone network and/or Internet capable of receiving a voice and/or data connection from a terminal associated to the creditor user. Typically, this terminal is the same used to acquire the identification code of the debtor user and advantageously is associated to an output device to show and/or print the outcome of the transaction, such as a display and/or a printer, for example thermal.

Advantageously the system can include an automatic device for supplying cash to a user of the ATM (Automatic Teller Machine) type. The device is configured to read a card, the amount to be supplied and an authorisation code that can be inserted by the user and to supply the money requested when the authorisation code read is the same as the authorisation code sent from the remote payment unit.

According to another aspect, the invention relates to a computer product that can be loaded directly into the memory of a digital processor and comprises parts of software codes capable of carrying out the method according to the invention when said computer product is executed on a digital processor.

The further characteristics and improvements are the object of the sub-claims.

### Brief description of drawings

The characteristics of the invention and the advantages deriving from it will be better explained in the following detailed description of the Figures enclosed, in which:
Fig. 1 shows an illustrative flowchart of the steps of a method according to the invention.
Fig. 2 shows an illustrative block diagram of a system according to the invention.

### Best mode for carrying out the invention

The method according to the invention allows a payment to be made between a buyer and a seller by means of a third party, using remote communication devices. The method is applied to any form of payment, the term "payment" being understood both as the transfer of money against the purchase of goods or services, as well as the transfer of any type of chattels or real estate corresponding to a transaction. For example, the buyer and seller can be the holders of an account at the third party entity and the payment mechanism can consist in applying a deduction of a value corresponding to the amount that is the object of the transaction from the account of the buyer and a consequent credit of the same amount in the account of the seller even without the actual movement of any money.

The method provides that for making a payment the buyer and seller are univocally identified, for example by means of codes represented by any alphanumeric or numerical sequence or of another type, or by associated identification for example using biometrical data. In particular the buyer's code, with which it is possible to identify univocally the subject that has the power to carry out the transaction and therefore to carry out the transfer of money or the like, can be made up of the code of a credit card or of other payment cards. The seller is generally provided with a terminal for the reading of the card, such as for example a POS terminal. However, the card is not the essential element of the procedure since the data contained in it can also be supplied verbally to the seller by the buyer face to face, or also remotely by telephone, fax or Internet.

In its preferred embodiment, the method makes provision for the buyer to give a payment card to the seller who provides for the reading of the identification code associated to it, for example by means of a POS terminal. The terminal generally is provided with a keyboard to acquire the secret PIN code from the debtor in the case that card requests it. This is an additional security code that allows the transaction to be blocked even before it has started. In fact if the PIN typed in is incorrect the transaction immediately stops even before the third party is contacted. The cards that are equipped with this safety characteristic are generally microchip debit cards such as for example the so-called bancomat or pagobancomat cards.

The payment details, in particular the transaction amount are typed in, generally by the seller, on the keyboard of the terminal, while the code that identifies the seller may also be typed onto the keyboard or be may be acquired in another way, for example by reading a non-volatile memory or a smart card in which the code has been stored during the installation stage.

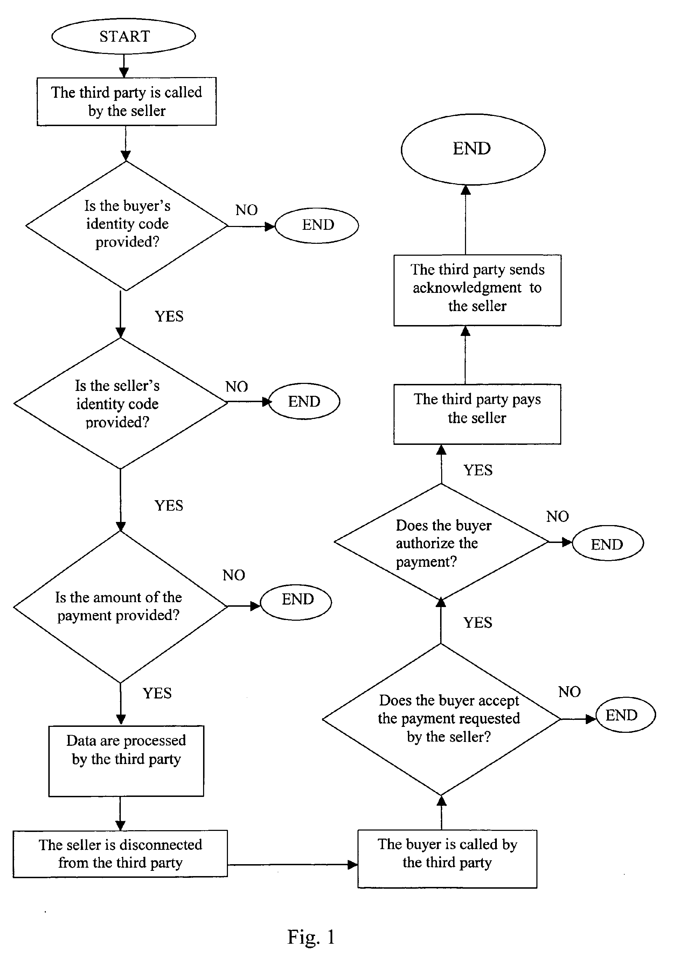

With reference to Fig. 1, once the buyer's identification code, the seller's identification code and the operation amount have been acquired, the seller contacts the third party to obtain the opening of the payment procedure. The call from seller to the third party can take place by any means. It can be a voice telephone call, a data connection via the Internet or on a dedicated or switched line. In a particularly advantageous embodiment, it is the terminal itself that reads the card and acquires the seller's identification codes and the operation amount in order to carry out the call automatically towards the third party using a data connection on a switched telephone line by means of a modem. However, other connection modalities can also be used such as those that provide the use of a digital or analogue line that can be dedicated or not and/or an analogue technology modem or ISDN or ADSL or the so-called " Voice over IP" or others.

According to one variant, the third party is contacted immediately after having acquired the identification code of the buyer, while the code of the seller and the operation amount are acquired and sent only after that the third party has validated the code and has started the transaction.

After this first stage, the method makes provision for the initialisation of a second stage, essential for the completion of the operation and that involves the buyer. The third party, once the call with the seller has been completed, calls the buyer preferably on his cellular telephone and requests from the buyer at least the acceptance of the payment by means of the typing in of one or more keys. In one variant, if the buyer accepts the payment, the third party also requests the authorisation of the payment itself, preferably by means of the introduction of an authorisation code.

If the authorisation is supplied, the third party executes the transaction and communicates the outcome to the seller by sending a vocal and/or data message to the terminal associated to the seller. The message can be sent following a suitable call or within the same connection used in the first stage for receiving the information from the seller after having placed the seller's terminal on stand-by for the subsequent reception of said information.

The outcome of the transaction is also sent to the buyer's terminal in the form of a vocal and/or data message. In particular this is sent in a stage subsequent to the reception of the consent after the call has been made with an SMS message.

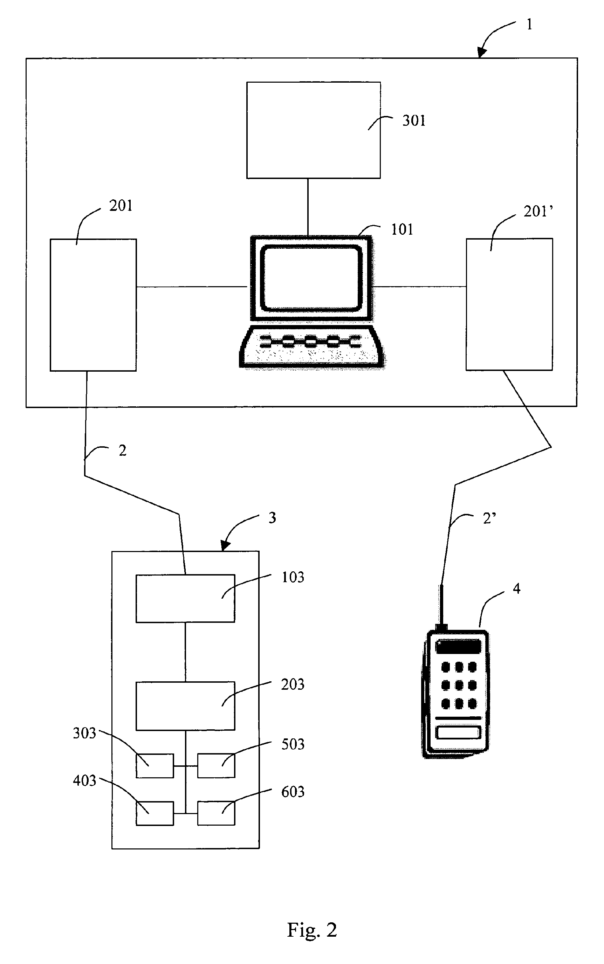

The method described is particularly suitable for execution on an electronic processor of a remote payment unit provided with suitable hardware interfaces towards the fixed and mobile telephone network. As shown in the system of Fig. 2, the remote payment unit 1 essentially made up of a digital processor 101 provided with interfaces 201,201' towards the fixed 2, mobile 2' telephone network and towards a mass storage 301 containing the database of users registered with the service, the respective identification codes and the telephone numbers associated with them.

Unit 1 is configured to receive a call from the terminal 3 of a seller by means of the fixed telephone network 2. Terminal 3 consists of a modem 103 to which a local control unit 203 is connected that is interfaced to the card reader 303 to read the identification code of the buyer, the thermal printer 403 to print the outcome of the transaction, the keyboard 503 to acquire the transaction amount and a reader 603 to read the seller's identification code. The mobile phone 4 of the buyer is instead interfaced to the unit 1 by means of the mobile telephone network 2'.

After having received the call from the terminal 3, the unit is configured in order to dial the cellular telephone number 4 of the buyer in order to request the consent for the transaction, for example by pressing one or more keys of the telephone 4. The outcome is then communicated to the seller's terminal 3 that, by means of the printer 403, makes provision to print the receipt that the buyer will sign in order to complete the operation.

According to one variant, the unit 1 comprises an alphanumeric sequence generator to generate authorisation codes randomly for every transaction. After having received the call from the terminal 3, unit 1 is configured to generate a random authorisation code that is sent to the cellular telephone 4 of the buyer in the form of a text message in the stage in which consent to the transaction is requested. The buyer will then type in said code on the keyboard of the terminal 3. The consent to the transaction will be considered as received if the authorisation code received is the same as the authorisation code sent. In this case consent is requested by means of the second telematic channel 2', but it is received by means of the first channel 2 through which the significant data of the transaction is transferred. This is particularly advantageous in credit card purchase procedures made via the Internet in which the terminal 3 is a PC associated to the buyer and channel 2 is the Internet.

In order to increase security, the authorisation codes generated for each transaction are of the OTP type, that is to say they can only be used once and they expire, namely they can only be used to close the transaction within a certain time window.

Naturally the invention is not limited to that described and disclosed, but it can be varied extensively, above all constructively without abandoning the inventive teaching disclosed above and claimed in the following. For example the financial transaction can be represented by a cash withdrawal, for example on an ATM (Automatic Teller Machines) circuit. In this case, using the same terminology, the debtor is the one who carries out the withdrawal and the creditor is the bank managing the ATM machine from which the debtor extracts the money. The payment system manages the authorisations so that the money requested can be supplied by the ATM machine. In particular it makes provision to request the authorisation by contacting the cellular telephone of the debtor in a similar way to that seen above.

According to one particularly advantageous embodiment, the PIN associated to the cash card is replaced and/or supplemented by an authorisation code supplied by the payment unit to the debtor before this is brought to the ATM machine. In particular the debtor contacts the payment unit providing the identification data of his card and the amount of the withdrawal to be carried out. The unit then makes provision for contacting the debtor at the telephone number associated with him during registration to the service. In particular it sends an SMS message containing a randomly generated authorisation code. The debtor can therefore go to the ATM machine and carry out the withdrawal. In one stage of the operation, the system will request the typing in of the authorisation code previously received.

In order to guarantee security, the codes that are generated and sent to the users are random and preferably have a limited time validity, for example 30 minutes, in order to prevent third parties who may come into in possession of the withdrawal card and the authorisation code from executing the operation even some days after authorization took place.

## Claims

1. Method for executing a financial transaction between a debtor and a creditor, such as a buyer and a seller, univocally associated to an identification code, capable of being executed on a remote digital processor associated to a third party responsible for supervising the transaction and the relative payment mechanism, the method including the following stages:
a. receiving, by means of a first telematic channel for transmission and/or audio and/or data reception, information at least relative to:
- the identification code of the debtor;
- the identification code of the creditor;
- the payment details, in particular the transaction amount;
b. formulating said information,
further **characterised by** comprising the following stages:
c. requesting consent from the debtor for the transaction by means of a second telematic channel for transmission and/or audio and/or data reception;
d. receiving said possible consent from the debtor;
e. processing of the payment if consent is received;
f. sending confirmation of the outcome of the transaction request to the debtor and/or to the creditor.

2. Method according to claim 1, **characterised in that** step c) makes provision for the dialling of a telephone number or the sending of a set of data to contact a telephone terminal associated to the debtor by means of a fixed and/or mobile telephone network.

3. Method according to claim 1 or 2, **characterised in that** the request for consent to the transaction includes the step of directing a voice and/or data call containing the transaction details and the request for authorisation towards a terminal associated to the debtor interfaced to the fixed and/or mobile telephone network, such as a mobile telephone, a palm or a laptop.

4. Method according to claim 2 or 3, **characterised in that** the request for consent to the transaction is sent to a cellular telephone.

5. Method according to one or more of the previous claims, **characterised in that** step d) makes provision for receiving the consent to the transaction by means of the second telematic channel in the form of an encoded signal such as that corresponding to the pressing of one or more of the keys on a telephone apparatus, a vocal sequence or a text message such as an SMS.

6. Method according to claim 5, in which the reception of consent to the transaction includes the reception of an authorisation code different to the debtor's identification code.

7. Method according to one or more of the previous claims 1 to 4, **characterised in that** step c) includes the sending of an authorization code different to the debtor's identification code and step d) provides for the receiving of said authorisation code by means of the first telematic channel, the consent to the transaction being considered as received if the authorisation code received is the same as the authorisation code sent.

8. Method according to claim 7, **characterised in that** the authorisation code is generated randomly for each transaction.

9. Method according to one or more of the previous claims, **characterised in that** step a) provides for the reception of a data and/or telephone connection by a terminal associated to the creditor by means of a fixed and/or mobile telephone network or switched or dedicated data networks.

10. Method according to claim 9, **characterised in that** the data and/or telephone connection is installed when a telephone number associated to the third party is dialled by the terminal associated to the creditor.

11. Method according to claim 10, **characterised in that** the data and/or telephone connection is installed with a fixed telephone terminal associated to the creditor.

12. Method according to one or more of the previous claims 1 to 8, **characterised in that** step a) provides the reception of a data and/or telephone connection by a terminal associated to the creditor by means of the Internet.

13. Method according to claim 10, **characterised in that** the data and/or telephone connection takes place by means of a communication protocol of the protected type.

14. Method according to one or more of the previous claims, **characterised in that** step f) provides the sending of a vocal and/or data message to the terminal associated to the creditor.

15. Method according to claim 14, **characterised in that** the message is sent by means of the same telematic channel used to receive the information from the creditor.

16. Method according to claim 15, **characterised in that** the message is sent within the same connection after the creditor's terminal has been placed on stand-by subsequent to the reception of information regarding step a).

17. Method according to one or more of the previous claims, **characterised in that** step f) provides the sending of a vocal and/or data message to the terminal associated to the debtor.

18. Method according to claim 17, **characterised in that** the message is sent in a stage subsequent to the reception of the consent after the call has been made.

19. Method according to claim 18, **characterised in that** the message is a text message such as an SMS.

20. Method according to claim 17 or 18, **characterised in that** the message is sent using a telematic channel different to that used to obtain consent.

21. Method according to claim 20, **characterised in that** the telematic channel is the Internet and the message is an e-mail addressed to an inbox associated to the debtor.

22. Computer product that can be loaded directly into the memory of a digital processor and that comprises parts of software codes capable of carrying out the method according to any of the claims 1 with 21 when said computer product is executed on a digital processor.

23. Telematic system for the secure execution of financial transactions between a first debtor user and a second creditor user, said first and said second user being associated to univocal identification codes, the system comprising:
- a remote payment unit (1) to process the transactions and confirm the outcome of said transactions;
- means (201, 2, 3) for acquiring the identification code of the debtor user from the creditor user;
- means (201', 2', 4) for acquiring payment details from the creditor user, in particular the transaction amount and the identification code of the user creditor;
- a first telematic channel (2) for transmission and/or audio and/or data reception through which the identification codes and the payment details can be transferred from the user creditor to the remote payment unit,
**characterised in that** the system further comprises:
- means (4) for acquiring consent to the transaction from the user debtor;
- a second telematic channel (2') for transmission and/or audio and/or data reception through which said consent can be requested from the payment unit (1),
the payment unit being configured to execute the following steps:
- receive from the creditor user by means of the first telematic channel (2) the identification codes of the two users and the payment details;
- request consent for the transaction from the debtor user by means of the second telematic channel (2');
- receive the possible consent for the transaction from the user debtor;
- process the payment if the consent is received;
- send confirmation of the completed transaction to the debtor user and/or to the creditor user.

24. System according to claim 23, **characterised in that** the means to acquire consent to the transaction from the debtor user include an interface (201') towards a fixed and/or mobile telephone network (2') capable of carrying out a voice and/or data call towards a telephone terminal (4) associated to the debtor user.

25. System according to claim 24, **characterised in that** the telephone terminal (4) is part of, or is interfaced with, a mobile telephone, a palm or a laptop by means of which the debtor user is able to receive the request for consent and/or send or not this consent.

26. System according to claim 24 or 25, **characterised in that** the telephone terminal (4) is a cellular telephone.

27. System according to one or more of the previous claims 23 to 26, **characterised in that** the payment unit (1) comprises a database (301) containing, for each identification code of debtor users, the telephone number(s) of cellular telephones associated to them, the unit (1) being configured to dial the cellular telephone number associated to the debtor user, to install a voice and/or data connection, to send the request for consent and receive or not said consent by means of the same connection in the form of vocal confirmation or an encoded signal that corresponds to the pressing of one or more keys of the cellular telephone (4).

28. System according to claim 27 modified as the consent is received in the form of a text message such as an SMS after the call has been made.

29. System according to one or more of the previous claims 23 to 28, **characterised in that** the means to acquire consent for the transaction comprise a unit capable of receiving and authenticating an authorisation code communicated by the debtor user.

30. System according to one or more of the previous claims 23 to 26, **characterised in that** the payment unit (1) comprises a database (301) containing, for each identification code of debtor users, the telephone number(s) of cellular telephones associated to them, the unit (1) being configured to send the request for consent in the form of a text message to the cellular telephone associated to the debtor user, the message containing an authorisation code, and receiving or not said authorisation code by means of the first telematic channel (2), the consent for the transaction being considered as received if the authorisation code received is the same as the authorisation code sent.

31. System according to claim 30, **characterised in that** the remote payment unit (2) includes a generator to generate randomly authorisation codes for each transaction.

32. System according to one or more of the previous claims 23 to 31, **characterised in that** the means to acquire the identification code of the debtor user from the creditor user include an interface (201) towards a fixed and/or mobile telephone network and/or the Internet (2) capable of receiving a voice and/or data connection from a terminal (3) associated to the creditor user.

33. System according to claim 32, **characterised in that** the terminal (3) is part of, or is interfaced with, a mobile telephone, a palm or a laptop or a desktop computer (103) by means of which the payment unit (1) is able to receive the identification code of the debtor user.

34. System according to claim 33, **characterised in that** the terminal (3) includes an input device (303) through which the identification code of the debtor user can be acquired by the system.

35. System according to claim 34, **characterised in that** the input device (303) is a keyboard by means of which the debtor user can type in his identification code.

36. System according to claim 34 or 35, **characterised in that** the input device (303) includes a magnetic and/or microchip and/or barcode or biometrical data card reader containing the debtor user's identification code.

37. System according to claim 36, **characterised in that** the reader (303) is adapted to read credit papers, debit cards, bancomat cards and/or smart cards or the like.

38. System according to one or more of the previous claims 34 to 37, **characterised in that** the input device (303) is configured to receive the identification code of the debtor user remotely by means of the Internet.

39. System according to one or more of the previous claims 23 to 38, **characterised in that** the means to acquire from the creditor user payment details and the identification code of the creditor user include an interface towards a fixed telephone and/or mobile network and/or the Internet (201) capable of receiving a voice and/or data connection from a terminal (3,503,603) associated to the creditor user.

40. System according to claim 39, **characterised in that** the terminal (3) is the same used for acquiring the identification code of the debtor user.

41. System according to claim 39 or 40, **characterised in that** the terminal (3) is associated to an output device (403) for showing and/or printing the outcome of the transaction.

42. System according to one or more of the previous claims 23 to 41, **characterised in that** it comprises an automatic device for supplying cash to a user, said device being configured to read a card, the amount to be supplied and an authorisation code that can be inserted by the user and to supply the money requested when the authorisation code read is the same as the authorisation code sent from the remote payment unit (1).
